# EUROPÄISCHE PATENTSCHRIFT

(11) **EP 2 100 652 B1**
(45) Veröffentlichungstag und Bekanntmachung des Hinweises auf die Patenterteilung: **04.01.2012**
(21) Anmeldenummer: 09003047.9
(22) Anmeldetag: 03.03.2009
(51) Int. Cl.: B01D 29/52, B01D 29/54, B01D 35/027, F01M 11/03

(54) **Ölfiltervorrichtung**
Oil filter
Dispositif de filtre à huile

(30) Priorität: 14.03.2008 DE 102008014416
(43) Veröffentlichungstag der Anmeldung: 16.09.2009
(73) Patentinhaber: IBS Filtran Kunststoff-/Metallerzeugnisse GmbH, 51597 Morsbach (DE)
(72) Erfinder: Stausberg, Wolfgang, 51597 Morsbach (DE); Beer, Markus, 51597 Morsbach (DE)
(74) Vertreter: Kierdorf, Theodor

(56) Entgegenhaltungen:
- EP-A- 1 733 775
- EP-A- 1 994 974
- FR-A- 1 407 307
- US-A- 5 702 237
- US-A- 6 165 373

## Beschreibung

Die Erfindung betrifft eine Saugölfiltervorrichtung zur Filterung von Öl in Motoren und Getrieben, eine Ölwanne mit einer solchen Ölfiltervorrichtung und ein Filtersystem mit einer Druckölvorrichtung und einer solchen Saugölfiltervorrichtung.

Zur Filterung von Öl in Motoren und Getrieben kann eine Saugölfiltervorrichtung zum Einsatz kommen. Dabei ist eine Pumpe am Ölauslass der Filtervorrichtung angeordnet, wobei die Pumpe mittels Unterdruck das zu filternde Öl durch ein Filtermedium saugt. Es ist üblich, eine Saugölfiltervorrichtung direkt in einem Ölsumpf einer Ölwanne anzuordnen, wobei das gesamte zu filtrierende Öl durch diese Saugölfiltervorrichtung strömt. Eine solche Konstruktion erfordert nur geringfügig zusätzlichen Bauraum, ist somit Platz sparend und benötigt keine zusätzlichen Anschlussleitungen. Das zugehörige Filtergehäuse einer Saugölfiltervorrichtung weist üblicherweise eine Oberschale und eine Unterschale auf, wobei ein Filtermedium zwischen den beiden Schalen eingeklemmt ist. Dabei sind jedoch enge Toleranzen einzuhalten, so dass hohe Anforderungen an die Fertigungstechnik gestellt werden. Da zudem bei hoher Viskosität des Öls beziehungsweise bei tiefer Temperatur des Öls ein Mindestölvolumenstrom durch den Saugölfilter passieren muss, um eine hinreichende Schmierung eines Motors oder eines Getriebes zu erreichen, lässt sich mit dem Filtermedium nur eine relativ geringe Filtrationsleistung erreichen.

Um eine höhere Ölreinheit zu erzielen, kann zusätzlich zu der Saugölfiltervorrichtung noch eine Druckölfiltervorrichtung vorgesehen sein. Bei einer Druckölfiltervorrichtung wird zu filtrierendes Öl mittels einer Pumpe in eine Filtervorrichtung hinein gedrückt. Eine solche Vorrichtung ist meist in einem Nebenstrom angeordnet und kann mittels zum Beispiel eines Ventils zugeschaltet werden. Da nur ein Teil, meistens weniger als 50 %, des zu filtrierenden Ölvolumenstromes durch eine derartige Druckölfiltervorrichtung hindurch strömt, lässt sich ein hoch effizientes Filtermedium, zum Beispiel in plissierter Form, einsetzen. Mit der hohen Filterleistung ist jedoch eine relativ hohe Schmutzbeaufschlagung verbunden, sodass ein Filtermedium einer Druckölfiltervorrichtung relativ häufig ausgetauscht werden muss. Die höhere Filtrationsleistung eines Systems aus Saugölfiltervorrichtung und Druckölfiltervorrichtung kann daher im Vergleich zu einer reinen Saugölfiltervorrichtung oftmals einen höheren Wartungsaufwand bedeuten.

Aus der US 6,165,373 A ist eine Saugölfiltervorrichtung gemäß Oberbegriff von Anspruch 1 bekannt, wobei ein Filterbeutel am Öleinlass angebracht ist. Darüber hinaus umfasst die Saugölfiltervorrichtung nach US 6,165,373 einen Nebenstrombereich mit mehreren aufeinander liegenden Filtermateralien. Die Filtermateralien sind allerdings so angeordnet, dass das zu filternde Öl in diesem Nebenstrombereich zuerst das Feinfilter und sodann das Feinstfilter durchströmt. Die Filterelemente sind aneinanderliegend miteinander befestigt, beispielsweise vernietet.

Der Erfindung liegt die Aufgabe zugrunde, einerseits die Filtrationsleistung der erfindungsgemäßen Saugölfiltervorrichtung zu verbessern und andererseits eine möglichst einfache Abstützung des Feinstfiltermediums dabei zu gewährleisten.

Die Aufgabe wird durch die Gegenstände der unabhängigen Ansprüche gelöst. Vorteilhafte Weiterbildungen der Erfindung sind Gegenstand der Unteransprüche.

Die erfindungsgemäße Saugölfiltervorrichtung für einen Motor oder ein Getriebe weist einen Öleinlass und einen Ölauslass an einem Filtergehäuse auf, wobei am Ölauslass eine Saugölpumpe anschließbar ist, mit welcher sich ein Unterdruck zwischen Öleinlass und Ölauslass erzeugen lässt, wobei die Saugölfiltervorrichtung zusätzlich ein Feinfiltermedium und ein Feinstfiltermedium aufweist, welche zwischen dem Öleinlass und dem Ölauslass angeordnet sind. Die erfindungsgemäße Saugölfiltervorrichtung ist so aufgebaut, dass das Feinfiltermedium entweder am Öleinlass oder am Ölauslass angebracht ist. Bei einem am Öleinlass angebrachten Feinfiltermedium handelt es sich um eine Inside-Outside-Filtervorrichtung. Ist das Feinfiltermedium am Ölauslass angebracht, liegt eine Outside-Inside-Filtervorrichtung vor. Bei beiden Filtervorrichtungstypen ist erfindungsgemäß das Feinstfiltermedium in Strömungsrichtung vor dem Feinfiltermedium und in einem Nebenstrombereich des Filtergehäuses angeordnet.

Es wird darauf hingewiesen, dass bei einer Filtervorrichtung mit einem Inside-Outside-Fließschema, welche nachfolgend verkürzt mit Inside-Outside-Filtenrorrichtung bezeichnet ist, zu filterndes Fluid vom Filtergehäuseeinlass direkt in eine Filtertasche einströmt und dann durch eine Filtertaschenlage in Richtung zum Filtergehäuseauslass strömt. Dadurch verbleiben die Rückstände im Inneren der Filtertasche und das gefilterte Öl kann durch den Filtergehäuseauslass ausströmen. Ein umgekehrtes Fließschema liegt bei einer Outside-Inside-Filtervorrichtung vor. Das zu filternde Fluid strömt durch den Filtergehäuseeinlass erst in das Filtergehäuse ein und dann weiter durch ein Filtermedium von außen nach innen in die Filtertasche. In der Filtertasche strömt das gereinigte Fluid zum Filtergehäuseauslass. Bei dieser Anordnung verbleiben somit die im Fluid vorhandenen Rückstände außerhalb der Filtertasche im Filtergehäuse. Bei einer Filtervorrichtung, bei der das Inside-Outside-Fließschema vorliegt, ist die Filtertasche so angeordnet, dass die Filtertaschenöffnung im Wesentlichen mit der Einlassöffnung des Filtergehäuses deckend ausgerichtet ist. Damit ist sichergestellt, dass das gesamte zu filternde Fluid zuerst in die Filtertasche einströmt und nicht ungefiltert zum Filtergehäuseauslass gelangen kann. Entsprechend ist umgekehrt bei einer Filtervorrichtung, bei der das Outside-Inside-Fließschema vorliegt, die Filtertaschenöffnung mit der Filtergehäuseauslassöffnung in Einklang gebracht. Die beiden Fließschematypen sind direkt umkehrbar und entsprechen einander.

Bei der Herstellung der erfindungsgemäßen Saugölfiltervorrichtung wird das Feinfiltermedium vorzugsweise nicht zwischen eine Oberschale und eine Unterschale des Filtergehäuses eingeklemmt, wobei enge Toleranzen beachtet werden müssen. Vielmehr wird es bei einer solchen Ausführungsform einer Inside-Outside-Filtervorrichtung am Öleinlass des Filtergehäuses angebracht, so dass bei der Fertigung des Gehäuses nur noch die Oberschale und Unterschale aneinander gefügt werden müssen. Das Strömungsverhalten von Öl beim Eintritt in das Filtergehäuse einer Inside-Outside-Filtervorrichtung mit der erfindungsgemäßen Saugölfiltervorrichtung unterscheidet sich dabei von jenem einer Filtervorrichtung, bei der das Feinfiltermedium zwischen den Gehäuseschalen im Wesentlichen horizontal angeordnet ist. Bei der erfindungsgemäßen Saugölfiltervorrichtung durchdringt bei einer Inside-Outside-Filtervorrichtung im Bereich des Öleinlasses bzw. bei einer Outside-Inside-Filtervorrichtung im Bereich des Ölauslasses nur ein relativ geringer Anteil des Öls das Feinfiltermedium. Dieser Anteil des Öls bildet einen sogenannten Nebenstrom. In diesem Bereich ist bei der erfindungsgemäßen Saugölfiltervorrichtung ein zusätzliches Feinstfiltermedium angebracht, welches eine höhere Filtrationsleistung als das Feinfiltermedium aufweist. Das Öl passiert also im Nebenstrombereich zuerst ein Feinstfiltermedium und anschließend ein Feinfiltermedium. Aus der Sicht einer kaskadenförmigen Filtration müsste die Reihenfolge der Filtermedien eigentlich umgekehrt gewählt werden, also zuerst Durchtritt durch ein Feinfiltermedium und daraufhin Durchtritt durch ein Feinstfiltermedium. Eine solche Lösung hat aber den Nachteil, dass für das relativ labile Feinstfiltermedium eine aufwändige Abstützung erforderlich ist. Hier setzt die Erfindung an, indem nur für den Nebenstrombereich, in welchem relativ wenig Ölvolumen hindurchtritt, die Reihenfolge der Filtermedien vertauscht wird. Das Feinfiltermedium dient dabei als Abstützung für das in Strömungsrichtung vorgelagerte Feinstfiltermedium, so dass keine zusätzlichen Halterungen für das Feinstfiltermedium erforderlich sind.

Bei hoher Viskosität bzw. tiefen Temperaturen des Öls wird das Feinstfiltermedium vom Öl kaum durchdrungen. Bei abnehmender Viskosität bzw. zunehmenden Temperaturen des Öls wird jedoch auch im Nebenstrombereich des Filtergehäuses das Feinstfiltermedium durchströmt, so dass die Saugölfiltervorrichtung insgesamt eine höhere Filtrationsleistung erreicht, wobei trotzdem ein geringer Fertigungsaufwand erforderlich ist. Ein besonderer Vorteil der erfindungsgemäßen Saugölfiltervorrichtung liegt darin, dass durch eine zusätzlich verwendete Druckölfiltervorrichtung, welche üblicherweise eine relativ kleine Baugröße und ein entsprechend kleines Filtermedium aufweist, bereits besser gefiltertes Öl passiert, so dass beim Einsatz der erfindungsgemäßen Saugölfiltervorrichtung die Standzeit der Druckölfiltervorrichtung erhöht wird. Damit ist der Wartungsaufwand für ein Filtersystem aus Druckölfiltervorrichtung und erfindungsgemäßer Saugölfiltervorrichtung niedriger als bisher.

Gemäß einer Ausführungsform der Erfindung sind das Feinstfiltermedium und das Feinfiltermedium direkt miteinander verbunden. Auch bei einer sehr turbulenten Strömung kann damit das relativ labile Feinstfiltermedium sicher angeordnet werden, ohne dass eine Abstützung oder ähnliches erforderlich wäre. Bevorzugt sind das Feinstfiltermedium und das Feinfiltermedium vollflächig miteinander verbunden. Dies stellt eine sehr sichere Ausführungsform dar. Es kann jedoch bereits genügen, wenn das Feinstfiltermedium nur an mehreren Stellen mit dem Feinfiltermedium verbunden ist, zum Beispiel an zwei Enden bzw. Rändern. Ein besonders geringer Fertigungsaufwand wird bei einer Ausführungsform erreicht, bei der das Feinstfiltermedium nur an einem Ende mit dem Feinfiltermedium direkt verbunden ist. Vorzugsweise ist diese Verbindung bei einer Inside-Outside-Filtervorrichtung nahe dem Öleinlass bzw. bei einer Outside-Inside-Filtervorrichtung nahe am Ölauslass. Ein in das Filtergehäuse eindringendes Öl drückt somit das Feinstfiltermedium an das Feinfiltermedium heran, sodass eine Befestigung des Feinstfiltermediums am gegenüberliegenden freien Ende nicht mehr erforderlich ist. Die zuverlässige Lage des Feinstfiltermediums wird im Grunde durch das einströmende Öl übernommen. Das Kombinationsfiltermedium aus Feinstfiltermedium und Feinfiltermedium ist somit sehr einfach herstellbar, indem bei einer Inside-Outside-Filtervorrichtung nur im Bereich des Öleinlasses bzw. bei einer Outside-Inside-Filtervorrichtung nur im Bereich des Ölauslasses eine Lage des Feinstfiltermediums an das Feinfiltermedium angebracht wird. Eine weitere Befestigung der beiden Filtermedien im Inneren der Filtertasche, die durch das Feinfiltermedium gebildet wird, ist nicht mehr erforderlich.

Das Feinstfiltermedium ist somit am Feinfiltermedium befestigt, wobei das Feinfiltermedium am Filtergehäuse befestigt ist. Die Befestigung kann bei einem Metallgehäuse durch zum Beispiel Crimpen und bei einem Kunststoffgehäuse durch zum Beispiel Schweißen erfolgen. Bei einer Inside-Outside-Filtervorrichtung ist das Feinstfiltermedium innerhalb der Filtertasche angebracht, wohingegen bei einer Outside-Inside-Filtervorrichtung das Feinstfiltermedium außerhalb der Filtertasche angebracht ist.

Die erfindungsgemäße Saugölfiltervorrichtung kann gemäß einer weiteren Ausführungsform derart ausgebildet sein, dass das Feinstfiltermedium vom Öleinlass beginnend einen zunehmenden Abstand zum Feinfiltermedium aufweist, wobei der maximale Abstand ein Mehrfaches der Dicke des Feinfiltermediums ist. Dieser zunehmende Abstand erlaubt es dem Öl, das Feinstfiltermedium an der Unterseite zu umströmen, so dass mehr Fläche von dem Feinfiltermedium durchdrungen werden kann. Vorzugsweise kann der Abstand durch mindestens einen Abstandshalter erzielt werden. Dies stellt sicher, dass ein freies Ende des sehr beweglichen Feinstfiltermediums von der Ölströmung nicht an das Feinfiltermedium angedrückt wird.

Bei der erfindungsgemäßen Saugölfiliervorrichtung hat es sich gezeigt, dass eine gute Filtrationsleistung erzielt wird, wenn das Feinfiltermedium Partikel mit einer Größe, welche größer 50 Mikrometer ist, und das Feinstfiltermedium Partikel mit einer Größe, welche größer 20 Mikrometer ist, abscheidet.

Die Aufgabe wird auch durch ein Ölfiltersystem gelöst, welches eine Druckölfiltervorrichtung und eine Saugölfiltervorrichtung wie vorstehend beschrieben aufweisen. Eine besonders effiziente Filtration lässt sich erreichen, wenn der Druckölfilter ein Feinstfiltermedium mit der gleichen Filtrationsleistung wie das Feinstfiltermedium im Saugölfilter aufweist.

Nachfolgend wird die Erfindung anhand von in den Zeichnungen dargestellten Ausführungsbeispielen weiter beschrieben. Es zeigen:
- Figur 1: eine schematische Darstellung einer ersten Ausführungsform der erfindungsgemäßen Saugölfiltervorrichtung;
- Figur 2: eine schematische Darstellung einer zweiten Ausführungsform der erfindungsgemä- ßen Saugölfiltervorrichtung;
- Figur 3: eine schematische Darstellung einer dritten Ausführungsform der erfindungsgemäßen Saugölfiltervorrichtung;
- Figur 4: eine schematische Darstellung einer vierten Ausführungsform der erfindungsgemäßen Saugölfiltervorrichtung;
- Figur 5: eine schematische Darstellung einer fünften Ausführungsform der erfindungsgemäßen Saugölfiltervorrichtung;
- Figur 6: eine schematische Darstellung einer sechsten Ausführungsform der erfindungsgemä- ßen Saugölfiltervorrichtung;
- Figur 7: ein Diagramm bezüglich der Filtrationseffizienz in Abhängigkeit von der Partikelgröße bei der dritten Ausführungsform der erfindungsgemäßen Saugölfiltervorrichtung;
- Figur 8: ein Diagramm bezüglich des Differenzdruckes in Abhängigkeit vom Ölvolumenstrom bei der dritten Ausführungsform der erfindungsgemäßen Saugölfiltervorrichtung; und
- Figur 9: eine schematische Darstellung für die Einordnung der erfindungsgemäßen Saugölfil- tervorrichtung in einem Filtersystem.

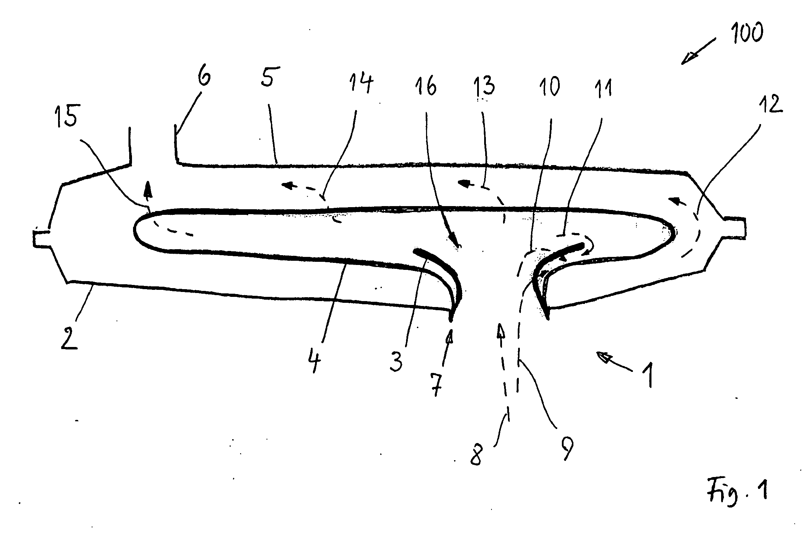

In Fig. 1 ist ein Längsquerschnitt einer Ausführungsform der erfindungsgemäßen Ölfiltervorrichtung 100 gemäß dem Inside-Outside-Fließschema dargestellt. Die Vorrichtung weist einen Öleinlass 1 und einen Ölauslass 6 auf, wobei an letzteren eine Saugpumpe angeschlossen werden kann. Der Öleinlass 1 ist an einer Seite in einer Filterunterschale 2 vorgesehen, wobei der Ölauslass 6 auf einer gegenüberliegenden Seite in einem möglichst großen Abstand vom Öleinlass 1 in einer Filteroberschale 5 angeordnet ist. Die Filterunterschale 2 und die Filteroberschale 5 bilden zusammen ein Filtergehäuse. Zu filtrierendes Öl tritt aufgrund eines durch die Saugölpumpe erzeugten Unterdruckes durch den Öleinlass 1 in den Filtervorrichtungsinnenraum 16 ein.

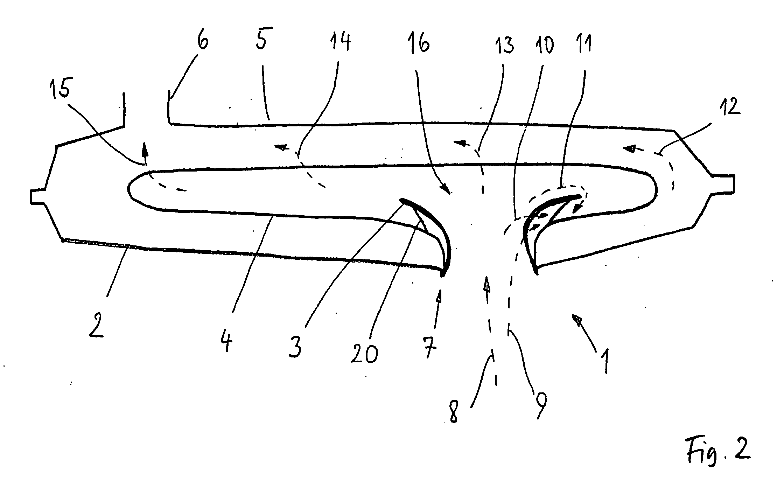

Das Feinfiltermedium 4 ist als Filtertasche ausgebildet, wobei die Taschenöffnung im Bereich des Öleinlasses 1 angebracht ist, siehe Bezugszeichen 7. An diesem Feinfiltermedium 4 ist mit einem Ende bzw. einem Rand das Feinstfiltermedium 3 angebracht. Bei der in Fig. 1 dargestellten Ausführungsform steht das Feinstfiltermedium in einem Abstand vom Feinfiltermedium ab, wobei das Feinstfiltermedium vom Öleinlass beginnend einen zunehmenden Abstand zum Feinfiltermedium 4 aufweist. Der maximale Abstand beträgt dabei ein Mehrfaches der Dicke des Feinfiltermediums 4. Die Ölströmung 8 dringt somit am Öleinlass 1 in das Filtergehäuse ein und teilt sich in einen Hauptstrom und Nebenstrom auf. Der Hauptstrom durchdringt das Feinfiltermedium 4, siehe Pfeile 13 bis 15, während der Nebenstrom auf das Feinstfiltermedium 3 trifft, siehe Pfeile 9 und 10. Das durch das Feinstfiltermedium 3 passierte Öl durchdringt anschließend das dahinter angeordnete Feinfiltermedium 4 und gelangt nach dem Umströmen der Filtertasche aus dem Feinfiltermedium 4 zum Auslass 6, siehe Pfeil 12. Durch den Abstand des Feinstfiltermediums 3 zum Feinfiltermedium 4 kann Öl auch das Feinstfiltermedium 3 umströmen und hinter das Feinstfiltermedium 3 gelangen, siehe Pfeil 11. Damit vergrößert sich die Fläche des Feinfiltermediums 4, durch welches noch nicht vom Feinstfiltermedium 3 gefiltertes Öl passieren kann. Der Abstand zwischen Feinstfiltermedium 3 und Feinfiltermedium 4 kann dadurch erreicht werden, dass das Feinfiltermedium 3 aufgrund der sich ausbildenden Strömung von selbst in diese Position gelangt. Falls dies nicht ausreicht, kann das Feinstfiltermedium 3 mit Verstärkungsfasern versehen werden oder durch mindestens einen Abstandshalter 20, siehe Fig. 2, auf Distanz gehalten werden.

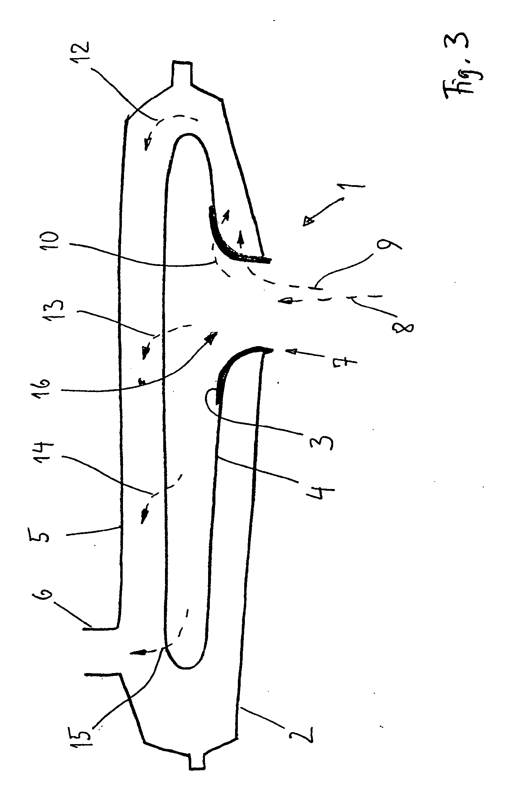

Die in der Fertigung einfachste Ausführungsform ist in Fig. 3 dargestellt. Das Feinstfiltermedium 3 liegt bei dieser Ausführungsform vollflächig an dem Feinfiltermedium 4 an. Der Anteil des Öls, welches das Feinstfiltermedium 3 durchdringt, ist umso höher, je niedriger die Viskosität bzw. je höher die Temperatur des Öls ist. Das Feinstfiltermedium 3 kann dabei eine so geringe Verwindungssteifigkeit besitzen, dass es von dem eindringenden Ölvolumenstrom 8 an das Feinfiltermedium gedrängt wird und dort vollflächig zur Anlage kommt.

Der Differenzdruck in der Saugölfiltervorrichtung nimmt bei dem Einsatz eines Feinstfiltermediums 3 im Vergleich zu einer Saugölfiltervorrichtung, in welcher nur ein Feinfiltermedium 4 vorgesehen ist, zu. Dieser Druckanstieg kann gemindert werden, wenn zwischen den beiden Filtermedien ein Abstand, zum Beispiel durch Abstandshalter 20, siehe Fig. 2, vorgesehen ist.

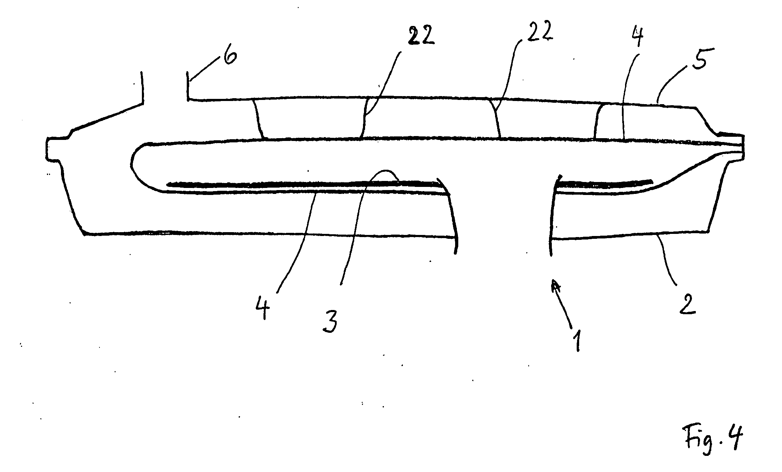

In Fig. 4 ist eine weitere Ausführungsform einer Inside-Outside-Filtervorrichtung dargestellt. Im Unterschied zu den in den Fig. 1 bis 3 gezeigten Ausführungsformen ist das Feinfiltermedium 4 an einer Seite zwischen der Unterschale 2 und Oberschale 5 des Filtergehäuses eingeklemmt. Das Feinstfiltermedium 3 ist nicht nur im Eingangsbereich des Filtergehäuses angeordnet, sondern erstreckt sich bis in den Randbereich der durch das Feinfiltermedium 4 gebildeten Filtertasche 21. Es befindet sich damit aber immer noch in einem Nebenstrombereich. Bei der in Fig. 4 dargestellten Ausführungsform kann das Feinfiltermedium 4 zusätzlich durch Abstandshalter 22 in seiner Position unterstützt werden.

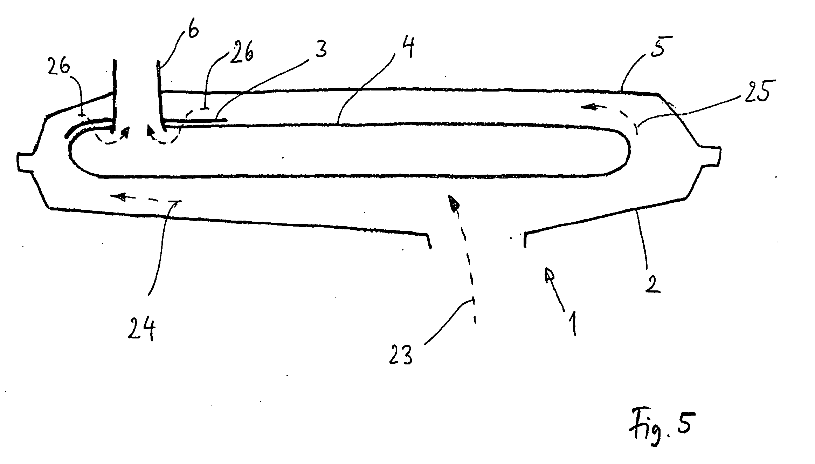

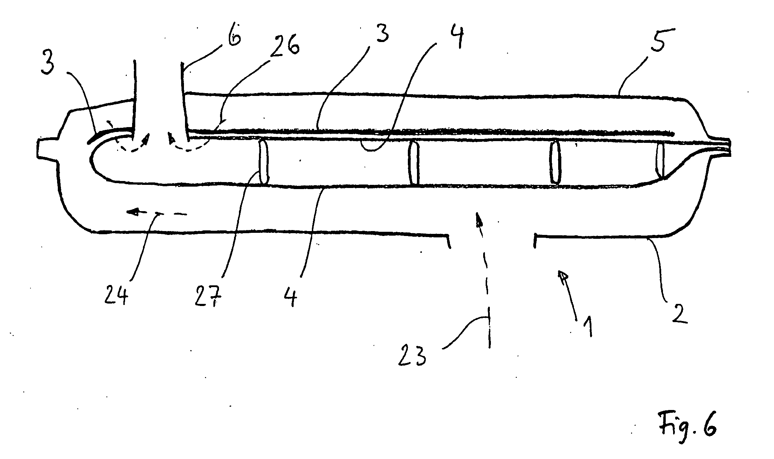

In den Fig. 5 und 6 ist eine Filtervorrichtung mit einem Outside-Inside-Fließschema dargestellt. Das zu filternde Fluid strömt durch den Öleinlass 1 in das Filtergehäuse ein und dringt entweder direkt durch das Feinfiltermedium 4 in die Filtertasche ein, siehe Strömungspfeil 23, oder strömt außen an der Filtertasche entlang, siehe Strömungspfeile 24 oder 25. Im Bereich des Auslasses 6 dringt das Fluid durch das Feinstfiltermedium 3 und anschließend durch das Feinfiltermedium 4 in die Filtertasche hinein und gelangt von dort zum Auslass 6, siehe Pfeile 26.

Bei der in Fig. 6 dargestellten Ausführungsform ist in analoger Weise zu der in Fig. 4 gezeigten Ausführungsform das Feinstfiltermedium 3 nicht nur im Bereich des Auslasses angeordnet, sondern erstreckt sich bis in den Randbereich der Filtertasche. Zusätzlich ist das Feinfiltermedium 4 zwischen Unterschale 2 und Oberschale 5 eingeklemmt und wird mit Abstandshaltern 27 auf einem vorbestimmten Abstand zueinander gehalten.

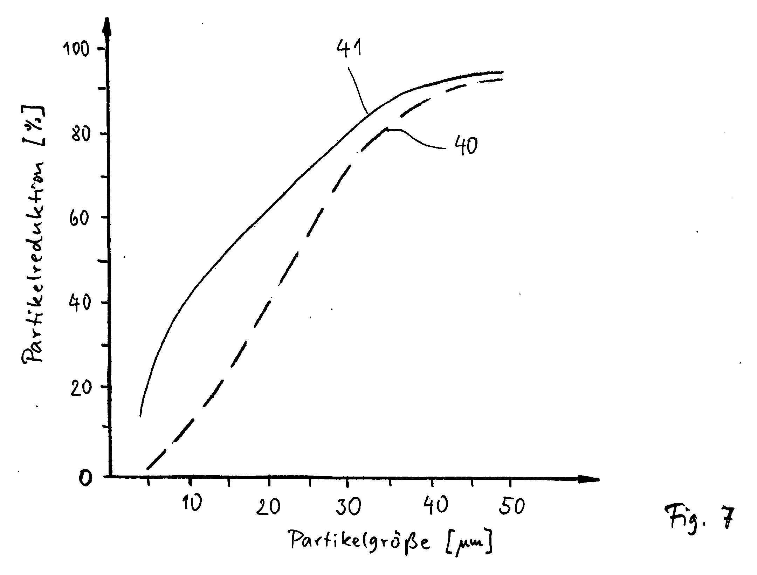

Fig. 7 zeigt ein Diagramm, in dem die Filtrationseffizienz von einer Saugölfiltervorrichtung, welche nur ein Feinfiltermedium aufweist, siehe gestrichelte Kurve 40, und einer Saugölfiltervorrichtung, welche gemäß der Erfindung ein Feinfiltermedium und ein Feinstfiltermedium aufweist, siehe durchgezogene Kurve 41, dargestellt ist. Auf der Ordinate ist die Partikelreduktion nach einer 60 Minuten dauernden Fluidzirkulation in Prozent aufgetragen. Auf der Abszisse ist die Partikelgröße in Mikrometer aufgetragen. Ein Vergleich der Kurven 40 und 41 zeigt, dass bei der Saugölfiltervorrichtung gemäß der Erfindung mit einem Feinfiltermedium und einem Feinstfiltermedium eine signifikant höhere Partikelreduktion erzielt wird. Zum Beispiel werden Partikel der Größe 20 Mikrometer durch die erfindungsgemäße Saugölfiltervorrichtung nach 60 Minuten Ölzirkulationsdauer zu etwa 62 % herausgefiltert. Bei einer Saugölfiltervorrichtung, welche nur mit einem Feinfiltermedium versehen ist, siehe Kurve 40, lassen sich in der gleichen Zeit nur etwa 40 % der Partikel mit einer Größe von 20 Mikrometern herausfiltern.

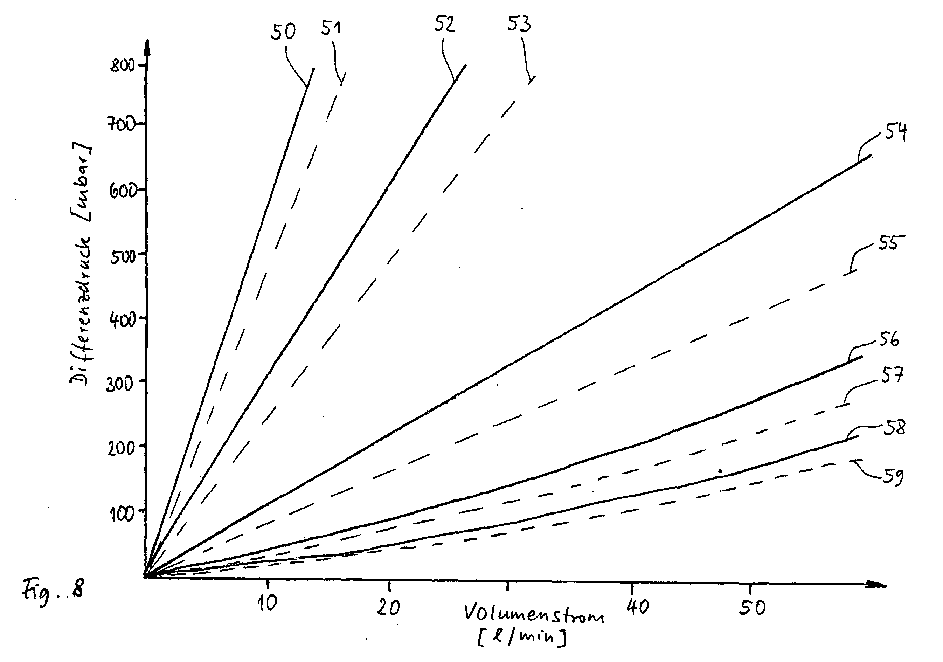

Durch Einsatz der erfindungsgemäßen Saugölfiltervorrichtung mit dem zusätzlichen Feinstfiltermedium erhöht sich der Differenzdruck in der Saugölfiltervorrichtung. Fig. 8 enthält Kurven, welche den Differenzdruck zeigen in Abhängigkeit vom Volumenstrom für eine Saugölfiltervorrichtung, in der nur ein Feinfiltermedium zum Einsatz kommt (gestrichelte Linien), und für eine Saugölfiltervorrichtung gemäß der Erfindung, in der ein Feinfiltermedium und ein Feinstfiltermedium verwendet werden (durchgezogene Linien). Die Kurve 50 zeigt den Verlauf bei der erfindungsgemäßen Saugölfiltervorrichtung bei einer Öltemperatur von -26 °C dar, bei der das Öl eine hohe Viskosität besitzt. Die Kurve 51 zeigt, für die gleiche Temperatur von -26 °C den Verlauf bei einer Saugölfiltervorrichtung, welche nur ein Feinfiltermedium aufweist. Bei einem Volumenstrom von zum Beispiel 14 l/min beträgt der Differenzdruck bei einer üblichen Saugölfiltervorrichtung 630 mbar, wobei der Differenzdruck bei der erfindungsgemäßen Saugölfiltervorrichtung 800 mbar erreicht. Obwohl der Differenzdruck bei der erfindungsgemäßen Saugölfiltervorrichtung bei so tiefen Temperaturen einen höheren Betrag aufweist, ist der Unterschied in der absoluten Höhe noch gering, so dass dieser Umstand akzeptiert werden kann. Die anderen Kurven 52 und 53 gelten für eine Öltemperatur von - 18 °C, die Kurven 54 und 55 für eine Öltemperatur von -4 °C, die Kurven 56 und 57 für eine Öltemperatur von +10 °C, und die Kurven 58 und 59 für +24 °C. Mit zunehmender Öltemperatur verringern sich die absolute Höhe des Differenzdruckes und auch der Unterschied zwischen den Werten, die bei einer erfindungsgemäßen Saugölfiltervorrichtung und bei einer Saugölfiltervorrichtung gemessen werden, die nur ein Feinfiltermedium aufweist. Bei einer Öltemperatur von + 24 °C beträgt der Differenzdruck bei einem Volumenstrom von 14 l/min nur noch etwa 25 mbar. Der Unterschied in den Werten zwischen den beiden Kurven 58 und 59 beträgt nur noch 2 mbar und ist damit vernachlässigbar gering. Dies verdeutlicht, dass beim Einsatz der erfindungsgemäßen Saugölfiltervorrichtung bei höheren Öltemperaturen nur noch ein unbedeutend höherer Differenzdruck vorliegt.

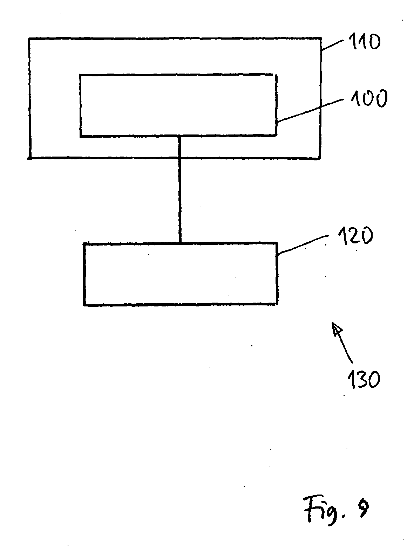

Von größerer Bedeutung ist hingegen, dass beim Einsatz der erfindungsgemäßen Saugölfiltervorrichtung die Filtrationsleistung zunimmt und damit die Standzeit eines zusätzlichen Druckölfilters erheblich gesteigert werden kann. Wird in einer Druckölfiltervorrichtung ein Feinstfiltermedium mit der gleichen Filterwirkung eingesetzt wie in der zugehörigen Saugölfiltervorrichtung, lässt sich eine um 35 % höhere Standzeit der Druckölfiltervorrichtung erreichen. Der Wartungsaufwand für ein Filtersystem 130, siehe Fig. 9, welches eine Druckölfiltervorrichtung 120 und Saugölfiltervorrichtung 100 in einer Ölwanne 110 aufweist, kann somit deutlich verringert werden.

## Patentansprüche

1. Saugölfiltervorrichtung (100) zur Filterung von Öl für einen Motor oder ein Getriebe, aufweisend:
- einen Öleinlass (1) und einen Ölauslass (6) an einem Filtergehäuse, wobei am Ölauslass (6) eine Saugölpumpe anschließbar ist, mit welcher sich ein Unterdruck zwischen dem Öleinlass (1) und dem Ölauslass (6) erzeugen lässt,
- ein Feinfiltermedium (4) und ein Feinstfiltermedium (3), welche zwischen dem Öleinlass (1) und dem Ölauslass (6) angeordnet sind, wobei das Feinfiltermedium (4) entweder am Öleinlass (1) oder am Ölauslass (6) angebracht ist, und ein Anteil des zu filternden Öls, welcher das Feinfiltermedium (4) im Bereich des Öleinlasses (1) oder Bereich des Ölauslasses (6) durchdringt, im Filtergehäuse einen Nebenstrom (9, 10, 26) bildet, **dadurch gekennzeichnet, dass** das Feinstfiltermedium (3) in einem Nebenstrombereich des Filtergehäuses und in Strömungsrichtung vor dem Feinfiltermedium (4) angeordnet ist, derart, dass das zu filternde Öl in diesem Nebenstrombereich zuerst das Feinstfiltermedium (3) und anschließend das Feinfiltermedium (4) durchströmt und wobei das Feinfiltermedium (4) das Feinstfiltermedium (3) abstützt.

2. Saugölfiltervorrichtung (100) nach Anspruch 1, **dadurch gekennzeichnet, dass** das Feinstfiltermedium (3) und das Feinfiltermedium (4) direkt miteinander verbunden sind.

3. Saugölfiltervorrichtung (100) nach Anspruch 2, **dadurch gekennzeichnet, dass** das Feinstfiltermedium (3) und das Feinfiltermedium (4) vollflächig miteinander verbunden sind.

4. Saugölfiltervorrichtung (100) nach Anspruch 2, **dadurch gekennzeichnet, dass** das Feinstfiltermedium an mehreren Stellen mit dem Feinfiltermedium verbunden ist.

5. Saugölfiltervorrichtung (100) nach Anspruch 2, **dadurch gekennzeichnet, dass** das Feinstfiltermedium (3) nur an einem Ende mit dem Feinfiltermedium (4) direkt verbunden ist.

6. Saugölfiltervorrichtung (100) nach einem der Ansprüche 1 bis 5, **dadurch gekennzeichnet, dass** das Feinstfiltermedium (3) vom Öleinlass beginnend einen zunehmenden Abstand zum Feinfiltermedium (4) aufweist, wobei der maximale Abstand ein Mehrfaches der Dicke des Feinfiltermediums (4) ist.

7. Saugölfiltervorrichtung (100) nach Anspruch 6, **dadurch gekennzeichnet, dass** der Abstand durch mindestens einen Abstandshalter (20) erzielt wird.

8. Saugölfiltervorrichtung (100) nach einem der vorherigen Ansprüche, **dadurch gekennzeichnet, dass** das Feinfiltermedium (4) Partikel mit einer Grösse, welche grösser 50 Mikrometer ist, und das Feinstfiltermedium (3) Partikel mit einer Grösse, welche grösser 20 Mikrometer ist, abscheidet.

9. Ölwanne (110) mit einer Saugölfiltervorrichtung (100) nach einem der Ansprüche 1 bis 8.

10. Ölfiltersystem (130) mit einer Druckölfiltervorrichtung (120) und einer Saugölfiltervorrichtung (100) nach einem der Ansprüche 1 bis 8.

11. Ölfiltersystem (130) nach Anspruch 10, wobei die Druckölfiltervorrichtung (120) ein Feinstfiltermedium (3) mit der gleichen Filtrationsleistung wie das Feinstfiltermedium (3) in der Saugölfiltervorrichtung (100) aufweist.

## Claims

1. A suction oil filter device (100) for filtering oil for an engine or a transmission, having:
- an oil inlet (1) and an oil outlet (6) on a filter housing, wherein a suction oil pump, by means of which a negative pressure can be generated between the oil inlet (1) and the oil outlet (6), may be connected to the oil outlet (6),
- a fine filter medium (4) and an superfine filter medium (3) which are arranged between the oil inlet (1) and the oil outlet (6), wherein the fine filter medium (4) is attached either to the oil inlet (1) or to the oil outlet (6), and a portion of the oil to be filtered, which penetrates through the fine filter medium (4) in the region of the oil inlet (1) or the region of the oil outlet (6), forms a secondary flow (9, 10, 26) in the filter housing, **characterised in that** the superfine filter medium (3) is arranged in a secondary flow region of the filter housing and upstream of the fine filter medium (4) as seen in the flow direction in such a way that the oil to be filtered firstly passes through the superfine filter medium (3) in this secondary flow region and then through the fine filter medium (4) and wherein the fine filter medium (4) supports the superfine filter medium (3).

2. A suction oil filter device (100) according to claim 1, **characterised in that** the superfine filter medium (3) and the fine filter medium (4) are connected directly to one another.

3. A suction oil filter device (100) according to Claim 2, **characterised in that** the superfine filter medium (3) and the fine filter medium (4) are connected to one another over their entire area.

4. A suction oil filter device (100) according to Claim 2, **characterised in that** the superfine filter medium is connected to the fine filter medium at a plurality of points.

5. A suction oil filter device (100) according to Claim 2, **characterised in that** the superfine filter medium (3) is connected directly to the fine filter medium (4) only at one end.

6. A suction oil filter device (100) according to one of Claims 1 to 5, **characterised in that**, starting from the oil inlet, the superfine filter medium (3) has an increasing distance from the fine filter medium (4), wherein the maximum distance is a multiple of the thickness of the fine filter medium (4) .

7. A suction oil filter device (100) according to Claim 6, **characterised in that** the distance is achieved by at least one spacer (20).

8. A suction oil filter device (100) according to one of the preceding claims, **characterised in that** the fine filter medium (4) separates particles having a size which is greater than 50 micrometres and the superfine filter medium (3) separates particles having a size which is greater than 20 micrometres.

9. An oil pan (110) having a suction oil filter device (100) according to one of Claims 1 to 8.

10. An oil filter system (130) having a pressure oil filter device (120) and a suction oil filter device (100) according to one of Claims 1 to 8.

11. An oil filter system (130) according to Claim 10, wherein the pressure oil filter device (120) has an superfine filter medium (3) having the same filtration performance as the superfine filter medium (3) in the suction oil filter device (100).

## Revendications

1. Dispositif de filtre à huile aspirant (100) destiné à filtrer l'huile pour un moteur ou une transmission, présentant :
- une admission d'huile (1) et un échappement d'huile (6) sur un boîtier de filtre, sachant qu'à l'échappement d'huile (6) peut être raccordée une pompe à huile aspirante pouvant générer une dépression entre l'admission d'huile (1) et l'échappement d'huile (6),
- un support de filtre fin (4) et un support de filtre très fin (3) qui sont disposés entre l'admission d'huile (1) et l'échappement d'huile (6), sachant que le support de filtre fin (4) est monté sur l'admission d'huile (1) ou l'échappement d'huile (6), et une part de l'huile à filtrer qui pénètre dans le support de filtre fin (4) dans la zone de l'admission d'huile (1) ou zone de l'échappement d'huile (6), forme un flux secondaire (9, 10, 26) dans le boîtier de filtre, **caractérisé en ce que** le support de filtre très fin (3) est disposé dans une zone de flux secondaire du boîtier de filtre et avant le support de filtre fin (4) dans le sens d'écoulement de telle manière que l'huile à filtrer dans cette zone de flux secondaire traverse tout d'abord le support de filtre très fin (3) puis le support de filtre fin (4) et sachant que le support de filtre fin (4) supporte le support de filtre très fin (3).

2. Dispositif de filtre à huile aspirant (100) selon la revendication 1, **caractérisé en ce que** le support de filtre très fin (3) et le support de filtre fin (4) sont directement reliés l'un à l'autre.

3. Dispositif de filtre à huile aspirant (100) selon la revendication 2, **caractérisé en ce que** le support de filtre très fin (3) et le support de filtre fin (4) sont reliés l'un à l'autre sur toute la surface.

4. Dispositif de filtre à huile aspirant (100) selon la revendication 2, **caractérisé en ce que** le support de filtre très fin est relié à plusieurs endroits au support de filtre fin.

5. Dispositif de filtre à huile aspirant (100) selon la revendication 2, **caractérisé en ce que** le support de filtre très fin (3) n'est relié directement au support de filtre fin (4) que sur une extrémité.

6. Dispositif de filtre à huile aspirant (100) selon l'une quelconque des revendications 1 à 5, **caractérisé en ce que** le support de filtre très fin (3) présente à partir de l'admission d'huile une distance croissante par rapport au support de filtre fin (4), sachant que la distance maximale est un multiple de l'épaisseur du support de filtre fin (4).

7. Dispositif de filtre à huile aspirant (100) selon la revendication 6, **caractérisé en ce que** la distance est obtenue par au moins un élément d'écartement (20).

8. Dispositif de filtre à huile aspirant (100) selon l'une quelconque des revendications précédentes, **caractérisé en ce que** le support de filtre fin (4) sépare des particules d'une grandeur supérieure à 50 micromètres, et le support de filtre très fin (3) sépare des particules d'une grandeur supérieure à 20 micromètres.

9. Bac à huile (110) avec un dispositif de filtre à huile aspirant (100) selon l'une quelconque des revendications 1 à 8.

10. Système de filtre à huile (130) avec un dispositif de filtre à huile sous pression (120) et un dispositif de filtre à huile aspirant (100) selon l'une quelconque des revendications 1 à 8.

11. Système de filtre à huile (130) selon la revendication 10, sachant que le dispositif de filtre à huile sous pression (120) présente un support de filtre très fin (3) doté de la même puissance de filtration que le support de filtre très fin (3) dans le dispositif de filtre à huile aspirant (100).
